(19) Europäisches Patentamt

European Patent Office

Office européen des brevets

(11) **EP 1 006 458 A1**

(12) **EUROPEAN PATENT APPLICATION**

(43) Date of publication:
07.06.2000 Bulletin 2000/23

(51) Int. Cl.7: **G06F 17/30**

(21) Application number: **98309822.9**

(22) Date of filing: **01.12.1998**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant:<br>**BRITISH TELECOMMUNICATIONS public limited company**<br>**London EC1A 7AJ (GB)** | (72) Inventor:<br>**The designation of the inventor has not yet been filed**<br><br>(74) Representative:<br>**Dutton, Erica Lindley Graham et al**<br>**BT Group Legal Services,**<br>**Intellectual Property Department,**<br>**8th Floor, Holborn Centre**<br>**120 Holborn**<br>**London EC1N 2TE (GB)** |

(54) **Methods and apparatus for information retrieval**

(57) A ranking tool (100) and document ranking method are provided for ranking documents presented, for example, as a result of a document search performed by a search engine (145). The ranking tool (100) determines, for each presented document, the value of one or more predetermined measures of document relevance and quality and calculates, using those values, a ranking score for that document according to a predetermined ranking algorithm. Determining the value of a particular measure may entail one or more further document searches by the search engine (145) using search criteria specific to the document under consideration. The ranking algorithm is derived from training data comprising a set of values of the predetermined measures for each of a selection of documents and a ranking assessment, by a group of one or more users, of the relevance and quality of each document in the selection. The ranking algorithm may thereby embody the preferences of those users for use when automatically ranking subsequently presented documents. The ranking algorithm may be derived from the training set, and updated through subsequent user feedback, using a neural network or genetic programming techniques.

Figure 1

EP 1 006 458 A1

**Description**

The present invention lies in the field of methods and apparatus for use in information retrieval systems and finds particular application in methods and apparatus for retrieval of information stored in distributed systems.

Systems that store information in a distributed manner, such as the Internet, commonly use search engines as a means for indexing the stored information.

The Internet is a multimedia computer communications network built on worldwide telephone and data networks. Over 100,000 servers of various types are connected to the Internet providing a publicly accessible distributed data store. A server holding files of information as data accessible using an Internet communication protocol called the "HyperText Transfer Protocol" (HTTP) is known as an HTTP server". Data files stored on HTTP servers and accessible by means of HTTP are known as "web pages" which together form the "World Wide Web", or simply the "WEB". Web pages are written using a special WEB language called HyperText Markup Language (HTML) that includes a facility to create links to other pages on the WEB, as appropriate, and enables a user to navigate through information on the WEB. Information held on the WEB is accessible to anyone having a computer connected to the Internet and with an interest in accessing it. An HTTP Uniform Resource Locator (URL) has been adopted as a WEB standard to provide a consistent international naming convention to uniquely identify the location of any WEB resource, including for instance documents, programs, sound and video clips. The HTTP enables URL-identified files (web pages) to be located and transferred for reproduction at user equipment connected to the Internet. Underlying transport protocols, primarily TCP/IP, enable connections to be established, between an Internet user and a WEB server for example, for the intercommunication of data.

Internet users may access information on the WEB using proprietary WEB browser products running on personal computers (PCs) or workstations linked to the Internet. WEB browsers communicate with WEB resources using standard Internet protocols to download selected web pages, interpret embedded HTML commands inserted at the time of markup by web page authors and, if appropriate, display those pages graphically

A typical Internet search engine contains an index to files, World Wide Web (Web) pages or File Transfer Protocol (FTP) files for example, that are accessible from various Web servers connected to the Internet. (A reference in the present specification to a Web page will be understood to include a reference to Web pages and other files accessible over the Internet.)

Such Internet search engines will have reviewed, at some point in time, each Web page referenced by its index and will also have stored some type of summary information for each Web page. For example, the title and Internet address (URL) of a Web page may be stored in an index along with any information included in the Web page under an HTML Meta tag. Some search engines also store a list of keywords for each file indexed and data on the number of times that each of these key words occurs in the relevant Web page.

In operation, Internet search engines receive commands submitted by client software such as Web browsers. These commands are known as search queries and they operate to instruct the search engine to compile and return to the Web browser a ranked list of references to Web pages that match the search query.

Most search engines aim to return, at the top of the list, references to those Web pages that represent the closest match to the received search query. To determine whether or not a particular Web page represents a match to the submitted search query, search engines use one or more types of algorithm.

It is known, for example, to use an algorithm called the Term Frequency Inverse Document Frequency (TFIDF). The TFIDF algorithm typically ranks Web pages according to the relative frequency of occurrence, within each page, of terms - keywords for example - specified in a search query. This is effectively a measure of the density of relevant terms in each page. The search engine then returns an ordered list of references to Web pages having a density measure above a certain threshold, from that with the highest frequency of occurrence to that with the lowest. However, such a technique is highly susceptible to the practice of "keyword spamming" - the practice of artificially repeating (hidden) terms in order to boost a page's relevance ranking.

Another known technique is to use information about hyperlinks between Web pages to help to determine relevance and ranking. Such techniques have been discussed for example in "The Anatomy of a Large-Scale Hypertextual Web Search Engine" by Brin S. & Page, L., Proc. WWW7 - 7th International World Wide Web Conference, Australia, April 1998. Typically, a model is developed whereby often-cited pages are favoured and/or whereby the scores of pages linked-to from the page under consideration are taken into account when scoring that page.

However, in both these known techniques, it is often the case that search algorithms fail to rank referenced Web pages in accord with user preferences

According to a first aspect of the present invention there is provided a document ranking apparatus, having:

an input;
measuring means arranged in use to determine, for a document received at the input, the value of each of one or more predetermined metrics;

ranking means to calculate, in respect of one or more users, a ranking score for said received document using the values determined by said measuring means;

an output to output said ranking score; and

training means arranged to accept input by said one or more users and thereby to adjust said ranking means.

In information retrieval, an underlying assumption may be made that users are ultimately the best (indeed only) judges of a page's overall quality, including the relevance of its information content, to their search queries. While known search engines may concentrate on the information content of a Web page, user preferences often have as much to do with other measures of quality of a Web page as they do with its apparent information content. However, providing a general measure of the quality of a Web page is difficult to do reliably. This is because other factors, not related to information density, often come into play. Many of these factors are subjective in nature and therefore cannot be readily measured by algorithms such as the TFIDF algorithm.

According to embodiments of the present invention, automated learning techniques may be used to construct an algorithm to determine a score for the overall quality of a Web page, the score being more closely aligned to user preferences than may be possible with conventional search engines. An overall quality assessment, going beyond pure measures of information content of the page, may lead to a more appropriate ranking of search results in response to a specific search query.

Preferably, different scoring algorithms may be derived in respect of a particular user or group of users.

According to a second aspect of the present invention there is provided method for determining a ranking score for a received document, including the steps of:

(a) generating, in respect of one or more users, a training data set including, for each document in a predetermined set of one or more documents, a user-determined ranking score and a value for each of one or more predetermined metrics;

(b) deriving a scoring algorithm from said training data set for calculating a ranking score using a set of values of said one or more metrics;

(c) determining, for the received document, a value for each of said one or more predetermined metrics;

(d) inputting the values determined at step (c) into the scoring algorithm derived at step (b) to calculate a ranking score for the received document; and

(e) outputting the ranking score.

Preferably, at step (b), a set of weightings is derived from the training data set, specific to said one or more users, and the scoring algorithm applies the set of weightings to a set of values to calculate a ranking score. In this way, preferences of a user may be expressed by means of the weightings to be applied to a given set of metric values. Any subsequently presented document may thus be scored by determining, for the document, the value for each of the metrics and then applying the user's current set of weightings to those values.

Preferably, a user may input a ranking score for a particular document, the user input being used to update the scoring algorithm and, in particular, the user's set of weightings.

According to a third aspect, there is provided a search engine for use in retrieving information stored in a distributed manner, including:

searching means for retrieving information according to predetermined search criteria;

measuring means to determine values for one or more predetermined metrics applied to said retrieved information;

ranking means for ranking the output of said searching means using said determined values;

training means for training said ranking means; and

output means for outputting information ranked by said ranking means to an operator of said search engine;

wherein said search engine is further adapted such that, in use, said operator may nominate ranking scores for retrieved information and input said ranking scores into said training means, whereby said training means adjust said ranking means.

Brief description of the drawings

A information retrieval tool embodying the present invention will now be described by way of example only and with reference to the accompanying figures, of which:

Figure 1 is a schematic representation of a system for retrieval of information stored in a distributed manner, according to embodiments of the present invention;

Figure 2 is a flow chart showing interactions between components of the system shown in Figure 1; and

Figure 3 is a schematic representation of an automated information retrieval tool according to a preferred embodiment of the present invention.

Overview of a preferred Information Retrieval System

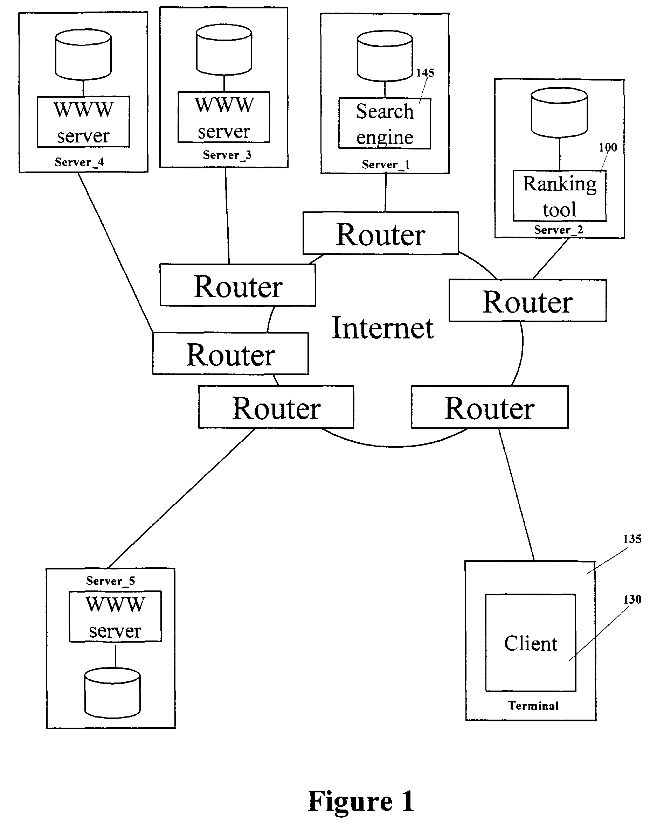

Referring to Figure 1, a block diagram is provided showing, in schematic form, the components of an information retrieval system according to embodiments of the present invention applied for use over the Internet. The Internet is an example of a distributed information storage and retrieval system based on a client server architecture. The system may include a first server, Server_1, supporting a search engine 145, a second server, Server_2, supporting a ranking tool 100 and third, fourth and fifth servers, Server_3, Server_4 and Server_5 respectively, each storing Web pages.

An index to the Web pages stored on server_3, server_4 and server_5 has been generated and stored by the search engine 145. It should be noted that the use of server_3, server_4 and server_5 is not intended to be limiting. In practice, there may be hundreds or thousands of such servers storing data referenced by the search engine 145.

At least one user terminal 135, such as an IBM™ compatible personal computer using a MICROSOFT™ operating system or a SUN™ WORK STATION using a UNIX operating system is also shown connected to the Internet.

The user terminal 135 may support a client software application such as a Web browser 130 like NETSCAPE NAVIGATOR™ or MICROSOFT INTERNET EXPLORER™. The Web browser 130 is adapted to communicate with each of the five servers of Figure 1 using protocols that support embedded links, such as those known in the context of the Internet as the Hypertext Transfer Protocol (HTTP), the Hypertext Mark-up Language (HTML), the Extensible Mark-up Language (XML) and the like. The invention is not, however, limited to the Internet or other Internet compatible networks. It is also applicable in other distributed information systems, client / server systems and mass storage systems where search tools employing similar functionality to Internet search engines may be used for information retrieval.

The ranking tool 100 is arranged to receive search results from the search engine 145, to further refine and order those search results and then to forward them to the Web browser 130. In this sense, the ranking tool 100 operates as an intermediate step between the search engine 145 and the Web browser 130.

The functionality implemented by the ranking tool 100, according to embodiments of the present invention, operates to re-order (if necessary) the list of referenced Web pages returned by the search engine 145, so that those Web pages most likely to match user preferences of overall page quality appear towards the top of the list.

To determine the likely quality of Web pages as perceived by a group of one or more users, the ranking tool 100 considers a greater number of metrics when assessing the overall quality of each Web page than is considered by search engines using TFIDF algorithms for example. Moreover, the ranking tool 100 ranks the quality of Web pages using a scoring algorithm derived for that group of users from user-assessments of an earlier sample of Web pages. This technique has the advantage that accuracy of information retrieval may be improved for particular users or groups of users through deriving scoring algorithms dedicated to those users.

For each Web page referenced in a set of search results, the ranking tool 100 measures a pre-determined set of metrics. Typically these measures may be either numerical values or discrete indicators of two or more measurement categories for a metric. For each Web page, the ranking tool 100 then uses an appropriate predetermined algorithm to calculate, from the measured metrics, an overall quality score for that page and hence to rank the pages according to the calculated scores.

In order to derive an appropriate scoring algorithm for use by a particular group of users, Neural Network or evolutionary computing techniques such as Genetic Programming may be used. Such techniques take as input the results of a user-assessment of relative quality for a representative sample of Web pages, obtained preferably under controlled trial conditions, in combination with a set of measurements for each page in that sample of a predetermined set of metrics. The combination of a set of metric measures and a set of user-assessment results is referred to as a "training set" for that user group. Different training sets may be derived for different groups of users and exploited by neural network and evolutionary computing techniques to derive appropriate scoring algorithms for use in the ranking tool 100. A particular trial technique and method of deriving a scoring algorithm will be described in detail later in this specification.

Updates to a training set may be required from time to time in order to keep up with changes in technology, such as new types of Web page, and also with changes to respective user preferences. In respect of a single user, updates to the training set and hence to a scoring algorithm may be made using the neural net each time the user retrieves a Web page and provides feedback on the accuracy of ranking determined by the ranking tool 100.

Some examples of the metrics that may be used by the ranking tool 100 include:

- The term frequency score of the text of the web page;
- The number of Inlinks to the web page;

- The score of each Inlink's anchor text against the search query;
- The term frequency score of each Inlink's text against the search query;
- The number of Outlinks that the web page has;
- The term frequency score of each Outlink's text against the search query;
- Whether or not the Web page has a title;
- The quality of the title (some titles are generated automatically);
- The Length of URL;
- The length of web page itself;
- Whether or not Spamming is detected.

These metrics will be defined and discussed in more detail later in this specification.

In determining the value of particular metrics for a Web page, particularly those not used by conventional search engines, the ranking tool 100 is required to access referenced pages and, if necessary, to follow up references embedded in those pages to further pages. In some circumstances, it may be necessary to initiate a further search using the search engine 145 and a search query generated automatically by the ranking tool 100. For this reason, the ranking tool is particularly well suited to off-line and proactive searching tools, as they do not need to return their results in real or near real time

In an alternative arrangement, a ranking tool 100 used in embodiments of the invention may be incorporated as part of a search engine 145 to improve the search results obtained by users.

Operation of the ranking tool 100

The operation of a ranking tool as used in embodiments of the invention will now be described in more detail.

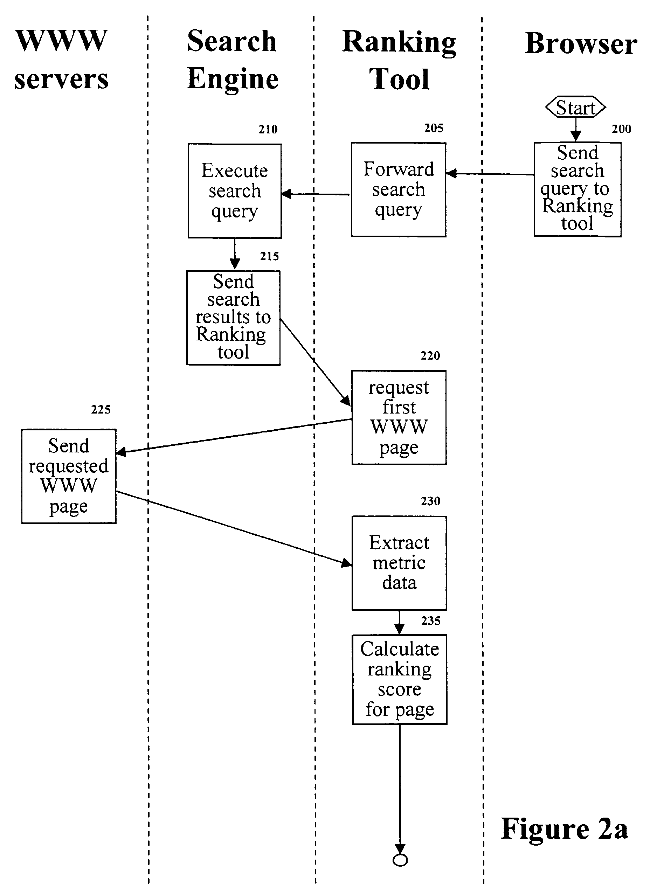

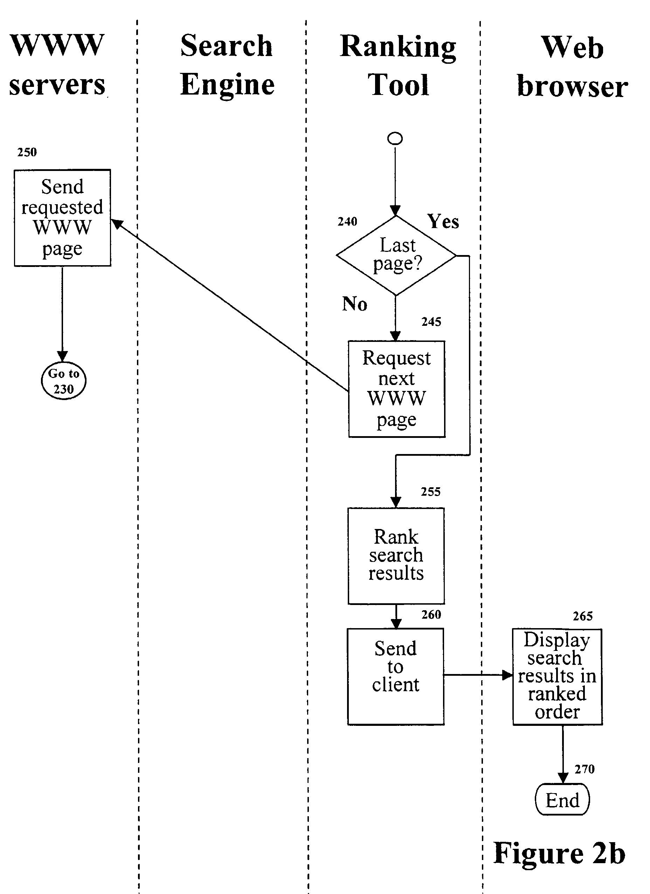

Referring to Figure 2, a diagram is provided showing interactions between ranking tool 100, the search engine 145, the Web browser 130 and the various web servers of Figure 1. The interactions detailed in Figures 2a and 2b occur after the ranking tool has derived one or more scoring algorithms from one or more sets of training data.

Referring firstly to Figure 2a, a typical sequence of events begins when an operator of the web browser 130 has accessed the ranking tool 100 via the Internet and sent a search query to the ranking tool 100 for execution. It should be noted that the web browser 130 discussed in relation to Figure 2a and 2b may alternatively be an automated search tool operating without user input.

At step 200, the Web browser 130 sends the search query to the ranking tool 100 and at step 205 the ranking tool receives the search query and forwards the search query to the search engine 145.

At step 210 the search engine 145 executes the search query, thereby generating a set of search results typically comprising an ordered list of URLs referencing Web pages selected by the search engine 145. At step 215 the search engine 145 returns the search results to the ranking tool 100.

The ranking tool 100 of the present invention uses a greater number of metrics than are used by a typical Internet search engine. It is therefore likely that the information required in respect of a particular metric will not be included in the returned search results. Therefore, in order to measure a particular metric for a referenced Web page, the ranking tool 100 must first obtain the referenced Web page and possibly pages referenced therefrom before the metrics required by the ranking tool 100 can be measured.

At step 220, the ranking tool 100 sends an HTTP "get" request to the first URL of the search results. At step 225 the server hosting the accessed URL returns the Web page corresponding to this URL to the ranking tool 100.

At step 230 this Web page is received by the ranking tool 100 and the value of each required metric is measured for that page. Further detail on how each type of metric is measured will be provided later in this specification.

At step 235, having determined values for each metric for that page, the ranking tool 100 selects the scoring algorithm appropriate to the user generating the search query, and uses it to calculate a ranking score for the page from the measured metric values.

Referring now to figure 2b, at step 240 the ranking tool 100 determines if there are any more Web pages remaining to be analysed from the returned search results. If so, then at step 245 the next referenced Web page is requested from the hosting server, whereupon at step 250 the requested page is sent to the ranking tool 100. Processing then returns to step 230 to determine the metric values for the returned Web page and to calculate, at step 235, the ranking score for that page. If yet further pages remain at step 240, this loop then repeats until all Web pages referenced in the search query results have been scored.

If, at step 240, a score has been determined for all Web pages referenced in the search results, the ranking tool 100 then orders the search results at step 255 according to the determined page scores and, at step 260 sends the reordered search results to the Web browser 130

At step 265, the browser 130 displays the search results.

An Automated (or Off-Line) Search tool

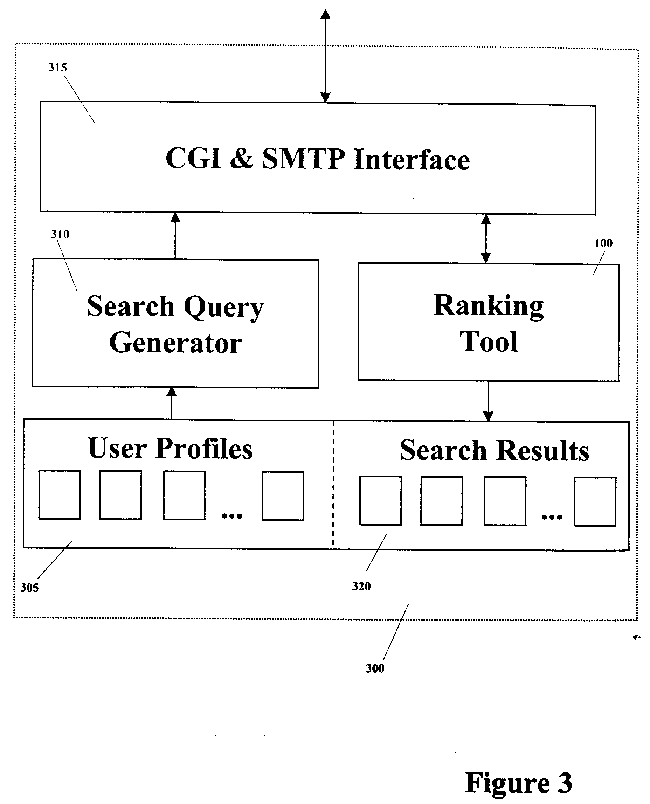

Referring now to Figure 3, an automated information retrieval tool 300 that uses the ranking tool 100 and profiles of user interests 305 is depicted.

The information retrieval tool 300 has a Common Gateway Interface (CGI) 315 that allows the tool 300 to communicate with the browser 135, the search engine 145 and the Web servers, Server_3, Server_4 and Server_5.

The information retrieval tool 300 has a set of user profiles 305. Each of these profiles may be a set of keywords and/or key phrases, each of which define the interests of a particular user of the automated tool 300.

In operation, these profiles may be uploaded to a search query generator 310 that uses the profiles to automatically generate search queries for each user. For example, key phrases may be passed directly to the search engine 145 as a search query. Sets of related key words may be grouped together and then passed to the search engine 145 as a search query.

In accordance with Figures 2a and 2b the search engine 145 and the ranking tool 100 of the automated information retrieval tool 300 then operate to rank the search results returned by the search engine 145 in response to the search queries generated by the search query generator 310.

Once the search results have been ranked, they are then stored in the search results store 320 where they may be accessed at a later date by a user. Alternatively, sets of search results may be e-mailed to the user on a regular basis such as daily, weekly, bi-weekly, monthly etc.

In order for the automated tool 300 to e-mail search results the CGI interface 315 above will also need to accommodate the Simple Mail Transfer Protocol (SMTP).

To automatically generate search queries, sets of key words in a user profile may need to be identified as being related. This may be achieved through the use of a similarity matrix. Further information on the use of similarity matrixes in conjunction with user profiles may be found in the Applicant's co-pending European Patent Application number 97306878.6, the features of which are incorporated herein by reference.

Preferred Web Page Metrics

The following preferred set of metrics may be used in training sets and with a ranking tool 100 according to embodiments of the present invention.

**Term frequency score** - this is the 'traditional' score of the page based on the frequency of terms co-occurring in the query and candidate page. A TFIDF algorithm returns a numerical measure of the similarity between the search query and the Web page based upon the frequency of occurrence of terms in the search query.

**Inlinks** - this represents the number of Web pages having embedded hypertext links leading to a candidate page.

Use of this metric is based on an assumption that a page pointed to by a large number of other pages, is popular and is therefore likely to be of higher quality than a page with fewer inlinks.

This metric may be measured by sending the URL of the candidate Web page as a search query to a search engine. The number of Web pages returned by this search query then forms the value of the Inlinks metric.

**Inlinks anchor text score** - the text of the link pointing to the candidate page (the "anchor text") is scored against the original query using a term frequency scoring scheme.

The text of links pointing to a page represent descriptions of the page by other people and are likely to contain keywords reflecting the theme(s) of the page.

Where a candidate Web pages has more than one link pointing to it, a term frequency score may be derived for each of the anchor texts and the resultant scored averaged.

**Inlinks full page text score** - the full text of the page pointing to the candidate page is scored against the original query using a term frequency scoring scheme such as the TFIDF algorithm.

The inclusion of this metric is based on the assumption that the relevance of the pages pointing to a candidate page may be a good indicator of the quality of the candidate page itself.

**Outlinks** - the number of embedded hypertext links within a candidate page. Pages containing many hyperlinks may be very useful ones.

**Outlinks full page text score** - the term frequency score of the pages pointed to by a candidate page. If these pages are highly ranked, it may be an indicator that the candidate page should also be highly ranked.

The TFIDF algorithm may be used to generate a numerical representation for each page or for the set of pages.

**Title existence** - the existence of a title of an HTML page indicates a page constructed with more care than one without.

This may indicate a higher quality page. The inclusion of this metric is based on the assumption that the existence of a title is often a factor in a user's decision as to which URLs within a set of search results to examine first.

This may be a binary type metric, where the Title Existence metric has a value of 1 if the Web page has a title and a value of 0 if it does not have a title.

**Title quality** - some Web page titles are automatically generated and may not be any indication of the content or the quality.

It is assumed that any page beginning with any character other than a capital letter or a number is in this category of automatically generated pages. It is assumed that these pages are often of lower quality than those with useful titles.

This metric may also be binary in nature such that Web pages with an automatically generated title receive a value for the Title Quality metric of 0. Those Web pages that have a manually generated title receive a value for the Title Quality metric of 1.

**Title text score** - the text of the title of the candidate page is scored against the original query using a term frequency scoring scheme. The assumption behind the inclusion of this metric is that the title text of a page should represent a concise description of the page content and where this is the case, it is likely to contain keywords reflecting the theme(s) of the page.

**Length of URL** - the depth of the subdirectory of a candidate page is easily measured from its URL. A page buried more deeply on a site may be of less interest. On the other hand, one nearer the top of a site may be too general.

The "Length of URL" metric may be measured by counting the number of forward slash characters in the URL.

**Length of Document** - the candidate page length in bytes. A very short page can obviously contain only a little information (though perhaps many links, measured above as outlinks). Pages which are too long may tend to cover too much information.

**Spamming detected** - a candidate page is judged to have been spammed if the number of instances of a particular word in the page is greater than a threshold percentage, say 10%. If this threshold is exceeded, this metric is set to 1, else 0. Term frequency scores from spammed pages are unreliable and so this flag is valuable when ranking a page.

**Formatting Information** - use of heading text to match against the original query could be a relevant factor, as could the proportionate number of headers used, as could the amount and quality of formatting generally.

**Images** - distribution and size of images could be relevant factors in ranking.

Derivation of a scoring algorithm

As stated above, the ranking tool 100 may use an automated learning technique involving a neural net or a genetic programming technique to derive a scoring algorithm, particular to a group of one or more users, based upon a training set.

To derive a training set, a representative sample of Web pages W may be selected in response to a given search query. Each user in a group of users assesses each Web page $w_i$ in the set and ranks the pages according to their perception of overall quality, including relevance, with respect to the original search query. Each user in the group gives each Web page $w_i$ a ranking score between, say, one and five or a score between one and ten, etc. A representative average ranking score for each Web page $w_i$ is then determined based upon all the users' ranking scores. The pages $w_i$ in the set W are then ranked in order of these average scores.

In addition, a measure for each of a predetermined set of metrics, selected from the preferred metrics listed above, is determined for each Web page in the set. Together, the ranked pages and the metrics form the training set for the group of users.

A scoring function or algorithm "$f$" may then be derived from the training set such that

$$f(w, m_{1,w}, ..., m_{n,w}) \rightarrow S_w$$

where:

w ∈ W is the set of pages
M is the set of metrics
$m_i$ ∈ M is metric i (of n)
$m_{i,j}$ is metric $m_i$ for page j
$S_w$ is the score for the page w

In operation, the ranking tool 100, having received a set of search results, uses the scoring algorithm "$f$" to determine a score for each referenced Web page in the search results based only upon measures of the metrics for those pages, the scoring algorithm already taking account of typical preferences of users in the group though its method

7

of derivation As mentioned above, a number of different techniques are available for deriving the scoring algorithm "*f*" from the training set. Neural networks are interconnected sets of simple processing units or nodes, whose functionality is loosely based on the biological neuron. The processing ability of the network is embodied within the strength (or weight) of the connections between nodes. These weights are derived from a process of learning from a set of training patterns.

In the present invention, is desired to train a neural network to learn to recognise some sense of the quality of a web page on the basis of certain statistics, or metrics, relating to the page (the number of inlinks, the number of outlinks, the nature of the title, the number of occurrences of keywords, and so forth). A MultiLayer Perceptron system may be used (that is, there is a weight given to each link in the net; the weighted sum of the inputs to a node is passed through an activation function to give its output which feeds in to the next layer of nodes; and the network is trained by adjusting the weights by back-propagation of errors).

Neural networks can take a training set of metrics and derive a series of weights for the various metrics in order to build a function of the form:

$$f(m_{1,w}, ..., m_{n,w}) = f_1 {}^* m_{1,w} + f_2 {}^* m_{2,w} + ... f_n {}^* m_{n,w}$$

That is, a neural net can derive a set of weights by which to multiply the metrics before adding them together to get the score for a page.

Details of Pre-processing of Training Set and Mechanism of MultiLayer Perceptron.

Consider, by way of example, deriving a scoring algorithm using a multi-layer perceptron neural net with the following metrics:

(i) Title flag - an indication of the type of text in the title (e.g. Does the title begin with a capital letter?)
(ii) Number of inlinks - the number of hyperlinks pointing to the document in question.
(iii) Number of outlinks - the number of documents pointed to be out current document.
(iv) Size - this was measured as the number of occurrences of distinct keywords in the document.

Each of these may first be converted to values between 0 and 1 since the sigmoid

$$\text{(i.e. } f(x) = \frac{1}{1 + e^{-x}})$$

activation function (see later for more details of activation functions) outputs only values between 0 and 1. The title flag takes one of four different qualitative states and so is easily (though crudely) converted to one of a set of four numeric values equally spaced throughout the required range. The remainder of the metrics used are all numeric. However, they could, theoretically, take on arbitrarily large values. To convert them to values in the required range the largest value occurring in the training set was obtained and all the values of that metric were divided by this largest value.

A MultiLayer Perceptron has a number of units called neurons arranged in layers. Each neuron has links into it from the previous layer or, in the case of the first layer, from the inputs. Each link has a weight or strength.

The sum of the products of the energies into the links (i.e. from the previous layer's nodes) and the strengths of the links is obtained. This value is then fed through the activation function. (One of the simplest activation functions is a threshold function this takes the value zero unless the input exceeds the threshold in which case it takes the value one. In such a context the node is said to have fired if the threshold was exceeded.) However, a more sophisticated sigmoid activation function may be used. Whereas the threshold function is step shaped the sigmoid function is a rounded step. This introduces all the advantages of working with continuous, differentiable ("smooth") functions. The output from the node is the output from the activation function. This is fed into the next layer or, in the case of the final layer this constitutes the output of the network.

However, for such a network to be of use it is necessary to train the network to give the desired output on the basis of the inputs. A straightforward application of the chain rule of differentiation (which gives a method of calculating the derivative of a compound function) gives a formula for determining the error in the output of a neuron on the basis of the errors of the neurons that it feeds into. Consequently working back from the output layer errors may be calculated for every node in each layer. This is the process of back-propagation of errors. Once this has been done any method of optimisation theory can be used to adjust the weights so as to reduce the total error at the output layer (which is in the objective function of the minimisation) to below some specified threshold. The standard method of gradient descent was used here. Great care should be taken to ensure that the process of presentation of inputs, determination of output, back-propagation of errors and finally adjustment of weights in not repeated too often or the network will be over-trained; that is it will give exactly the required output for the data it has "seen" but be unable to generalise this to "unseen" data.

Genetic programming goes a step further than neural network technology, in that rather than deriving a set of weights for each metric, genetic programming is capable of deriving a program which will compute the page score given the page metrics as input.

In this approach, therefore, there is the possibility of a more sophisticated calculation than in neural networks - for example, it may be that the value of two metrics needs to be combined in a non-additive way to calculate the score. This is not possible with the neural net approach

Subjective Testing Considerations

To derive the training set, a group of users is asked to evaluate a set of Web pages and to score them between say 1 and 5 or 1 and 10. The average ranking value from the user rankings is then calculated for each page. The metrics for each page is then calculated and the training set is formed by ordering the set of metrics for the pages according to the average user ranking values. This manual rating of pages is preferably carried out according to standard subjective testing guidelines to ensure a statistically meaningful training set is derived.

Subjective testing techniques are used as it is believed that they will provide a good picture of how individuals will perceive the quality of Web pages returned by a search engine.

Subjective testing requires that the measurements be performed using an appropriately controlled environment and procedure. For example, even the order of presentation of the Web pages to the persons rating the pages can influence their opinions in an undesirable way. It is also important to realise that a few people merely trying out trials informally in the office or home are unlikely to provide a reliable measurement of user preferences.

A single subjective observation is much less precise than an objective measurement, but precision and repeatability can be improved by gathering, in an experiment, opinions averaged over a sufficiently large sample of people. From this, an estimate of the population mean opinion may be made. Even with a large sample size, careful design and execution of the experiment are needed to minimise the effects of unwanted variables. Within the experiment, there will be varying opinions caused solely by differences between individuals, but other things such as the environment or the sequence of events will also cause variation; precision will be diluted and repeatability will suffer unless these are controlled in some way.

There are various ways to reduce perturbations in the data caused by various nuisance effects, including such things as the sequence of events etc. This can be done by ensuring that:

- each subject experiences the same experimental material (i.e. list of topics) but in a different order from all other subjects;
- each selection of stimulus material (i.e. a set of search results from a search query) occurs once in each of the positions in the sequence presented to the subjects;
- for each topic, each subject experiences a different order of presentation of Web pages. This reduces any effect of subjects' fatigue on scores, as well as minimising any effect of order of presentation on scores.

To achieve this, the experiment is preferably based on a Latin square design.

The experiment could use an 8x8 Latin square. The rows and columns of the square should then be randomised, for example as set out in Table 1.

| | | Columns | | | | | | | |
|---|---|---|---|---|---|---|---|---|---|
| | | 1 | 2 | 3 | 4 | 5 | 6 | 7 | 8 |
| Rows | 1 | 4 | 2 | 5 | 1 | 6 | 7 | 8 | 3 |
| | 2 | 2 | 4 | 7 | 3 | 8 | 5 | 6 | 1 |
| | 3 | 1 | 3 | 8 | 4 | 7 | 6 | 5 | 2 |
| | 4 | 5 | 7 | 4 | 8 | 3 | 2 | 1 | 6 |
| | 5 | 3 | 1 | 6 | 2 | 5 | 8 | 7 | 4 |
| | 6 | 7 | 5 | 2 | 6 | 1 | 4 | 3 | 8 |
| | 7 | 6 | 8 | 3 | 7 | 4 | 1 | 2 | 5 |
| | 8 | 8 | 6 | 1 | 5 | 2 | 3 | 4 | 7 |

**Table 1**

In Table 1, Rows represent subjects i.e. persons rating pages and Columns represent order of presentation of topics i.e. search results. So, for example, subject 1 would start with the results from search query 4, then the results from search query 2, etc, and end with the results from search query 3.

To increase the precision of the results, the design could be replicated, requiring multiples of 8 subjects.

A range of search queries should be chose, e.g. from business and leisure interests. The search queries should not be ambiguous, and should be fairly specific for the search engine to return pages which are directly related to the query. An example set of search queries is:

- Monty Python
- Millennium Problem
- Network-centric Computing
- Information Society
- Snowboarding
- Sherlock Holmes
- Car Theft Prevention
- The Titanic

To obtain a representative distribution of Web pages, the following procedure is recommended:

(i) classify the metrics being used. To keep the experiment size manageable, two or three categories of measure per metric is suggested. For example, inlinks (2), outlinks (2), titles (2), length of URL (2), length of document (3), spamming (2), e.g. a range of values for a metric may be divided into categories of high and low;

(ii) obtain a number of pages (about 60) for each search query so that all of the above categories are covered;

(iii) sort the pages according to categories and form a distribution of this classification across all search queries so as to form a search query space (i.e. at least one with a high value of each variable and one with a low value of each variable, and the majority with the most frequent combinations of variables). It is important that this is done regardless of any page scores obtained by a search engine.

Different randomisations of the pages for each topic should be used for each subject. This will minimise any effect of order of presentation on scores. Ideally, for each topic, the pages should be ranked according to some obvious feature (e.g. length of document) and then different randomisations produced, so that each subject sees the pages in a different order.

As an additional precaution, a preliminary condition should be presented before those described above. This ensures that all subjects are equally "pre-conditioned" and that they are familiar with the experiment procedure before the main body of the experiment begins. To the subject, this preliminary part does not appear separate, or different, from the remainder of the test, but the opinions recorded here are not included in the same analysis as the rest of the results.

A major consideration when designing any experiment is the stamina of the subjects. Subjects tend to become weary and unresponsive if a session lasts much more than about 50 minutes, even with a short break half-way through. Similarly, subjects are not usually willing or able to commit themselves to a large number of test sessions; 3 or 4 is a typical limit. For these reasons, the following suggestions are made:

> the test should be split up into three sessions (of three topics per session, including the preliminary). The subjects should be advised after they have completed each session, and should not be able to go straight onto the next session;
>
> subjects should each complete the sessions in a similar timescale. It would be advisable to give them a minimum and a maximum time between sessions (e.g. one day minimum and three days maximum);

It is preferable to record how long each subject takes to vote on each page (from when the page was first presented) as well as logging start and finish times and dates for each of the topics, and therefore for each of the sessions.

All subjects should undertake the test in a similar, controlled environment. This will reduce the effects of unwanted variables. Preferably, a specific room/desk for the test is provided.

At the beginning of each topic, it would be useful to have a question for subjects about how interested they are in that particular topic, using a five point scale (very interested, quite interested, neither, not very interested and not interested at all). It is preferable to safeguard against subjects being able to continue onto the next Web page without voting. Subjects should not be allowed to change their opinions after they have voted except where the wrong box has been clicked.

For each subject, the following results should be obtained:

(i) subject name;
(ii) row number of design;
(iii) column number (i.e. order of presentation)
(iv) session number;
(v) topic number;
(vi) score for each subject's level of interest in the topic;
(vii) page number;
(viii) score for each page;
(ix) dates and times for starting and finishing sessions, topics and pages.

Initially an analysis of variance should be carried out. This helps assess the probability of an effect (e.g. a variation in opinion) arising by chance.

Following the analysis of variance, a multiple regression should be done. This will show any relationship between the search engine results and the objective factors, and between the subjects' scores and the objective factors.

The first regression is done for Y (opinion score) on all of the factors (such as length of document, inlinks etc) separately for each topic. This should then be compared with the sets of page scores obtained (from the search engine, not subjects), again separately for each topic. From this, another multiple regression should be done, this time of the (search engines') page scores on the same factors as before. Comparison can then be made between the calculated opinion scores and the calculated (search engine) page scores. This will draw attention to any differences and improve the modelling. If there are no significant differences between the topics, then an average over all the topics can be used. Otherwise the topics should be classified and averages obtained for each class.

## Claims

1. A document ranking apparatus, having:

> an input;
> measuring means arranged in use to determine, for a document received at the input, the value of each of one or more predetermined metrics;
> ranking means to calculate, in respect of one or more users, a ranking score for said received document using the values determined by said measuring means;
> an output to output said ranking score; and
> training means arranged to accept input by said one or more users and thereby to adjust said ranking means.

**2.** A document ranking apparatus according to Claim 1, wherein said ranking means include weighting means arranged to apply a predetermined set of weightings to said determined values for use in calculating said ranking score, said set of weightings being specific to said one or more users.

**3.** A document ranking apparatus according to Claim 2, wherein said training means include neural network means arranged to accept the input by said one or more users and thereby to adjust said set of weightings.

**4.** A method for determining a ranking score for a received document, including the steps of:

(a) generating, in respect of one or more users, a training data set including, for each document in a predetermined set of one or more documents, a user-determined ranking score and a value for each of one or more predetermined metrics;
(b) deriving a scoring algorithm from said training data set for calculating a ranking score using a set of values of said one or more metrics;
(c) determining, for the received document, a value for each of said one or more predetermined metrics;
(d) inputting the values determined at step (c) into the scoring algorithm derived at step (b) to calculate a ranking score for the received document; and
(e) outputting the ranking score.

**5.** A method according to Claim 4, wherein, at step (b), a set of weightings is derived from said training data set, specific to said one or more users, and wherein said scoring algorithm applies said set of weightings to a set of values to calculate a ranking score.

**6.** A method according to Claim 4 or Claim 5, wherein, at step (b), the scoring algorithm is derived from the training data set using a neural network.

**7.** A method according to any one of claims 4 to 6, including the further step:

(f) receiving user feedback on the ranking score determined at step (d) and using said feedback to adjust said scoring algorithm.

**8.** A search engine for use in retrieving information stored in a distributed manner, including:

searching means for retrieving information according to predetermined search criteria;
measuring means to determine values for one or more predetermined metrics applied to said retrieved information;
ranking means for ranking the output of said searching means using said determined values;
training means for training said ranking means; and
output means for outputting information ranked by said ranking means to an operator of said search engine;
wherein said search engine is further adapted such that, in use, said operator may nominate ranking scores for retrieved information and input said ranking scores into said training means, whereby said training means adjust said ranking means.

**9.** A search engine for use in retrieving and ranking documents stored in a distributed manner, including searching means for retrieving information according to predetermined search criteria and document ranking means according to any one of claims 1 to 3.

**Figure 1**

| WWW servers | Search Engine | Ranking Tool | Browser |
|---|---|---|---|

**WWW servers** | **Search Engine** | **Ranking Tool** | **Browser**

Start

200 Send search query to Ranking tool

205 Forward search query

210 Execute search query

215 Send search results to Ranking tool

220 request first WWW page

225 Send requested WWW page

230 Extract metric data

235 Calculate ranking score for page

**Figure 2a**

# WWW servers

# Search Engine

# Ranking Tool

# Web browser

**250**

Send requested WWW page

Go to 230

**240** Last page? — Yes

No

**245** Request next WWW page

**255** Rank search results

**260** Send to client

**265** Display search results in ranked order

**270** End

## Figure 2b

**Figure 3**

**European Patent Office**

## EUROPEAN SEARCH REPORT

Application Number

EP 98 30 9822

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 97 38377 A (AT & T CORP ;COHEN WILLIAM W (US); SINGER YORAM (US)) 16 October 1997 <br> * abstract * <br> * page 1, line 1 - page 6, line 9 * | 1-9 | G06F17/30 |
| Y | WO 95 29452 A (APPLE COMPUTER ;ROSE DANIEL E (US); BORNSTEIN JEREMY J (US); TIENE) 2 November 1995 <br> * abstract * | 1-9 | |
| Y | EP 0 747 846 A (AT & T CORP) 11 December 1996 <br> * the whole document * | 1-9 | |
| A | US 5 619 709 A (CAID WILLIAM R ET AL) 8 April 1997 <br> * abstract * <br> * column 1, line 1 - column 3, line 42 * | 1-9 | |
| | | | **TECHNICAL FIELDS SEARCHED (Int.Cl.6)** <br><br> G06F |

The present search report has been drawn up for all claims

| Place of search | Date of completion of the search | Examiner |
|---|---|---|
| THE HAGUE | 28 April 1999 | Katerbau, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 98 30 9822

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-1999

| Patent document cited in search report | | Publication date | Patent family member(s) | | Publication date |
|---|---|---|---|---|---|
| WO 9738377 | A | 16-10-1997 | NONE | | |
| WO 9529452 | A | 02-11-1995 | US | 5724567 A | 03-03-1998 |
| | | | AU | 2363895 A | 16-11-1995 |
| EP 0747846 | A | 11-12-1996 | US | 5675710 A | 07-10-1997 |
| | | | CA | 2174688 A | 08-12-1996 |
| | | | JP | 9026963 A | 28-01-1997 |
| US 5619709 | A | 08-04-1997 | US | 5794178 A | 11-08-1998 |